# EUROPÄISCHE PATENTSCHRIFT

(11) **EP 4 453 674 B1**
(45) Veröffentlichungstag und Bekanntmachung des Hinweises auf die Patenterteilung: **17.06.2026**
(21) Anmeldenummer: 22839324.5
(22) Anmeldetag: 19.12.2022
(51) Int. Cl.: G05B 19/05

(54) **TECHNIK ZUR PARAMETRIERUNG UND/ODER KONFIGURATION FÜR EINE AUF EINER SPEICHER-PROGRAMMIERBAREN STEUERUNG BASIERENDEN VORRICHTUNG**
PARAMETERISATION AND/OR CONFIGURATION TECHNIQUE FOR A DEVICE BASED ON A PROGRAMMABLE LOGIC CONTROLLER
TECHNIQUE DE PARAMÉTRAGE ET/OU DE CONFIGURATION POUR UN DISPOSITIF BASÉ SUR UN AUTOMATE PROGRAMMABLE INDUSTRIEL

(30) Priorität: 20.12.2021 DE 102021133935
(43) Veröffentlichungstag der Anmeldung: 30.10.2024
(73) Patentinhaber: PHOENIX CONTACT GmbH & Co. KG, 32825 Blomberg (DE)
(72) Erfinder: LANGE, Andreas, 31737 Rinteln (DE); WÜRGER, Andreas, 30853 Langenhagen (DE)
(74) Vertreter: v. Bezold & Partner Patentanwälte - PartG mbB
(86) Internationale Anmeldenummer: PCT/EP2022/086700
(87) Internationale Veröffentlichungsnummer: WO 2023/117938

(56) Entgegenhaltungen:
- US-A1- 2010 235 614
- US-A1- 2015 186 119
- US-A1- 2020 103 843
- JAMRO MARCIN ET AL: "IEC 61131-3 programmable human machine interfaces for control devices", 2013 6TH INTERNATIONAL CONFERENCE ON HUMAN SYSTEM INTERACTIONS (HSI), IEEE, 6 June 2013 (2013-06-06), pages 48 - 55, XP032475672, ISSN: 2158-2246, ISBN: 978-1-4673-5635-0, [retrieved on 20130809], DOI: 10.1109/HSI.2013.6577801

## Beschreibung

Die Erfindung betrifft eine Technik zur Parametrierung und/oder Konfiguration einer auf einer speicherprogrammierbaren Steuerung basierenden, automatisierungstechnischen Vorrichtung, vorzugsweise einer auf einer speicherprogrammierbaren Steuerung basierenden Fernwirk-Außenstation.

Eine speicherprogrammierbare Steuerung (SPS, englisch: programmable logic controller, PLC) ist ein Gerät, das zur Steuerung oder Regelung einer Maschine oder Anlage eingesetzt und auf digitaler Basis programmiert wird. Derartige Maschinen oder Anlagen mit mindestens einer SPS werden z. B. als automatisierungstechnische Anlage bezeichnet. Zur Programmierung der SPS sind aus der Praxis eine Vielzahl unterschiedlicher SPS-Engineering-Werkzeuge und Frameworks bekannt.

Die Europäische Norm EN 61131, die auf der internationalen Norm IEC 61131 basiert, befasst sich mit den Grundlagen speicherprogrammierbarer Steuerungen. Die Norm IEC 61131-3 (auch DIN EN 61131-3) ist ein internationaler Standard für Programmiersprachen von SPSen. Ihr Ziel besteht in der Standardisierung der Programmierung der Steuerungssoftware für SPSen. Dabei sollen Programmiersprachen herstellerunabhängig in einem einheitlichen Organisationskonzept (POE - Programm-Organisationseinheiten) mit der Pflicht zur Variablendeklaration unter Verwendung von elementaren und abgeleiteten Datentypen angewendet werden. Die Norm EN 61131-3 legt die Syntax und Semantik einer vereinheitlichten Reihe von Programmiersprachen für SPSen fest.

Die IEC-61131-konformen Programmiersprachen bieten eine hohe Anzahl an Freiheitsgraden, die dem Benutzer die Möglichkeit bieten, das Steuerungsprogramm gemäß seinen Vorstellungen zu realisieren und Zusatzfunktionen, z. B. komplexe Logiken, vorzusehen.

Daher werden vermehrt auch die Steuerungen von Fernwirk-Außenstationen (englisch: remote terminal unit, RTU) mittels der IEC-61131-konformen Programmiersprachen erstellt. Eine RTU dient ebenfalls zur Steuerung oder Regelung einer Maschine oder Anlage und wird auf digitaler Basis programmiert, wobei die RTU ferner für große Distanzen zu einer Leitstation und robuster gegenüber äußeren Einflüssen, z. B. hoher Temperatur und/oder Feuchtigkeit, ausgelegt sein können. Üblicherweise werden RTU herstellerabhängig programmiert.

Die Überwachung und Steuerung der RTU erfolgt an der entfernten Leitstation üblicherweise mittels einer Visualisierung, d.h. eine Mensch-Maschinen-Schnittstelle der automatisierungstechnischen Anlage inkl. einer Visualisierung des Steuerungsvorgangs der SPS in Form einer grafischen Oberfläche zur Überwachung und/oder Steuerung der SPS.

Heutzutage werden zwei bekannte Arten von RTUs eingesetzt. Zum einen kann bei der Realisierung einer RTU als SPS die Konfiguration der RTU durch die SPS-Programmierung vorgenommen werden. Dazu muss der Benutzer jedoch die SPS von Grund auf selbst programmieren, was eine vertiefte Kenntnis in der SPS-Programmierung voraussetzt. Entsprechend ist der Engineering-Aufwand für die Realisierung einer solchen RTU als SPS hoch. Allerdings sind auch die Freiheitsgrade hoch, da sich so auch Zusatzfunktionen, z. B. komplexe Logiken, realisieren lassen, sofern der Benutzer über die notwendigen Kenntnisse verfügt. Ein- und Ausgangsmodule, mittels denen Feldgeräte an die SPS zur Überwachung, Steuerung und/oder Regelung der Maschine oder Anlage signaltechnisch verbunden sind, können zudem bei dieser Umsetzung nicht zur Laufzeit der SPS hinzukonfiguriert werden. Für die Kommunikation über das Fernwirkprotokoll muss ferner ggf. ein Stack integriert werden. Üblicherweise handelt es sich hierbei um ein Stack in einer Hochsprache, wobei das Stack in die Firmware der SPS integriert wird. Der Einsatz eines in die Firmware integrierten Hochsprachen-Stacks hat den Nachteil, dass für Änderungen, Erweiterungen und/oder Updates am Stack ein (ganzes oder teilweises) Firmwareupdate durchgeführt werden muss.

Zum anderen können fertige RTUs von verschiedenen Herstellern am Markt erworben werden. Bei diesen fertigen RTUs handelt es sich um konfigurierbare, aber in sich abgeschlossene Geräte, d. h. Blackbox-Geräte. Je nach Gerät kann der Anwender Ein- und Ausgangsmodule hinzufügen oder verändern. Über eine Konfigurationssoftware oder über eine Weboberfläche können Datenpunkte angelegt und mit physikalischen Ein- und Ausgängen verknüpft werden. Der Engineering-Aufwand beim Einsatz einer fertigen RTU ist gering, d.h. der Benutzer muss über keine SPS-Programmierkenntnisse verfügen. Allerdings sind auch die Freiheitsgrade gering. So lässt sich keine Zusatzlogik zu den RTU-Funktionen hinzuprogrammieren. Zudem sind Änderungen und/oder Updates an den Stacks nicht ohne Weiteres und üblicherweise nur über ein Update der Firmware möglich.

Beispielhafter Stand hierzu ist aus den folgenden Dokumenten bekannt. So zeigt US 2015/0186119 A1 ein System zur Fernvisualisierung, Bearbeitung und Überwachung für die Entwicklung, Verwaltung und Bereitstellung von grafischen Webseiten, die auf Industriegeräten (z. B. Industriecontrollern, Antrieben usw.) gespeichert werden können. Diese Seiten können über einen Webbrowser von mobilen Geräten aus ferngesteuert aufgerufen werden. Das System ermöglicht dem Benutzer, sowohl webbasierte Mensch-Maschine-Schnittstellen zur Überwachung eines industriellen Prozesses zu entwickeln und bereitzustellen als auch Webseiten zu erstellen, die grafische Darstellungen des auf dem Industriegerät ausgeführten Steuerungsprogramms wiedergeben.

Die US 2010/0235614 A1 offenbart eine Kommunikationskonfiguration von programmierbaren Logiksteuerungsmodulen (PLCs) in einer industriellen Automatisierungsumgebung. Es werden Systeme und Methoden bereitgestellt, die es einem programmierbaren Logiksteuerungsmodul automatisch ermöglichen, in einem Kommunikationsnetzwerk zu arbeiten, sobald es mit diesem verbunden ist.Andere Steuerungsmodule, ein Personal Computer oder ähnliche Geräte können auf das Modul zugreifen und/oder mit ihm interagieren, sobald es mit einem Netzwerk verbunden ist.

Das Dokument JAMRO, M. ET AL.: "IEC 61131-3 programmable human machine interfaces for control devices",2013 6TH INTERNATIONAL CONFERENCE ON HUMAN SYSTEM INTERACTIONS (HSI), IEEE, 6. Juni 2013 (2013-06-06),Seiten 48-55, beschreibt grafische HMIs (Human-Machine Interfaces), die in Steuerungsgeräten wie industriellen PLC-Controllern (Programmable Logic Controllers) eingesetzt werden. Insbesondere wird eine plattformübergreifende Lösung beschrieben, die HMI-Entwicklungstools und eine Laufzeitumgebung integriert und dabei die spezifischen Anforderungen solcher Geräte berücksichtigt, einschließlich begrenzter Ressourcen. Die HMI-Visualisierung ist auf grafische Objekte ausgerichtet und kann in den Sprachen programmiert werden, die in der Norm IEC 61131-3 definiert sind, zusammen mit Steuerungsalgorithmen.

Das Dokument US 2020/0103843 Al betrifft eine weitere Veröffentlichung aus dem allgemeinen Stand der Technik.

Es ist eine daher Aufgabe der Erfindung, eine verbesserte Technik zur Parametrierung und/oder Konfiguration für eine auf einer SPS basierenden Vorrichtung, vorzugsweise für eine auf einer SPS basierenden RTU, bereitzustellen, mit der Nachteile herkömmlicher Ansätze vermieden werden können. Die Aufgabe der Erfindung ist es insbesondere, eine solche Technik bereitzustellen, die eine vereinfachte Parametrierung und/oder Konfiguration und eine vereinfachte Erweiterbarkeit durch Hinzufügen von Ein- und/oder Ausgangsmodulen ermöglicht.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Ein Grundgedanke der vorliegenden Erfindung besteht darin, eine ganzheitliche Technik bereitzustellen, mit der eine SPS-basierte Vorrichtung, z. B. eine RTU, zur Laufzeit der SPS beliebig um Ein-und/oder Ausgangsmodule erweitert werden kann und ohne Engineering-Aufwand in Form von SPS-Programmierung zur Laufzeit der SPS frei konfiguriert und/oder parametriert werden kann.

Gemäß einem ersten allgemeinen Gesichtspunkt der Erfindung wird ein Verfahren zur Parametrierung und/oder Konfiguration einer auf einer speicherprogrammierbaren Steuerung, SPS, basierenden, automatisierungstechnischen Vorrichtung, vorzugsweise einer auf einer SPS basierenden Fernwirk-Außenstation, RTU, bereitgestellt. Die SPS bzw. die Vorrichtung kann zur Überwachung und/oder Steuerung einer Anlage oder Maschine dienen, und mit der Anlage oder Maschine eine automatisierungstechnische Anlage bilden.

Mindestens ein Ein- und/oder Ausgangsmodul ist mit einem Bus, insbesondere einem Rückwandbus, der Vorrichtung signaltechnisch verbindbar. Das mindestens ein Ein- und/oder Ausgangsmodul bietet zweckmäßig die Möglichkeit, die SPS signaltechnisch mit Feldgeräten, insbesondere mit Sensoren und Aktoren, an der Anlage oder Maschine zu verbinden, um die Anlage oder Maschine entsprechend überwachen und/oder steuern zu können. Beispielsweise sind Sensoren über das mindestens eine Ein- und/oder Ausgangsmodul an die Eingänge der SPS geschaltet und übermitteln u.a. Zustandsparameter der Maschine an die SPS, wobei die Sensoren z. B. Temperaturfühler, Füllstandsensoren oder Positionssensoren sein können. Ferner können Aktoren, welche jeweils zur Bewegungssteuerung eines oder mehrerer Maschinenbauteile ausgebildet sind, über mindestens ein Ein- und/oder Ausgangsmodul an den Ausgängen der SPS angeschlossen sein und mittels eines Steuerungsprogramms angesteuert werden. Aktoren sind z. B. ansteuerbare Ventile für Hydraulik oder Druckluft, oder Komponenten für Antriebssteuerungen, beispielsweise Drehzahl- oder Schrittmotorsteuerungen.

Das Verfahren umfasst ein Ausführen eines Steuerungsprogramms, das lediglich (d. h. ausschließlich) in mindestens einer IEC-61131-konformen Programmiersprache erstellt ist, zur Steuerung der Vorrichtung. Mit anderen Worten, das Steuerungsprogramm umfasst keine Programmiersprache, die nicht IEC-61131-konform ist. Dadurch ist das Steuerungsprogramm unabhängig vom Typ und Hersteller der SPS bzw. Vorrichtung. Das Steuerprogramm kann im Folgenden auch als SPS-Programm bezeichnet sein.

Die internationale Norm IEC 61131 befasst sich, wie bereits erwähnt, mit den Grundlagen speicherprogrammierbarer Steuerungen, wobei die Norm IEC 61131-3 speziell für SPS vorgesehene Programmiersprachen vorgibt. Üblicherweise ist das SPS-Programm modular mittels eines IEC-61131-Frameworks aufgebaut, wobei das IEC-61131-Framework auch als Programmiergerüst zur Erstel-lung einer SPS bzw. einer auf einer SPS-basierenden RTU bezeichnet wird. Ein solches Framework (Programmiergerüst) ist und/oder umfasst Sammlungen von Codestücken, vorgefertigten Programmgerüsten, Funktionen, Funktionsbausteinen, usw. mit denen eine Programmieraufgabe schneller gelöst werden kann. Das Steuerungsprogramm kann somit anhand der im Framework enthaltenen Funktionsbausteinen modular aufgebaut sein, wobei (instanziierten) Steuerungs-Funktionsbausteinen, welche für die Steuerung der Anlage oder Maschine mittels der SPS relevant sind, einzelne Funktionen zur Überwachung, Steuerung und/oder Regelung der Anlage oder Maschine, d. h. den über das mindestens eine Ein- und/oder Ausgangsmodul mit dem SPS signaltechnisch verbundenen Feldgeräten, zukommen.

Das Verfahren umfasst ferner ein Ausführen eines Visualisierungsprogramms, das mit dem Steuerungsprogramm signaltechnisch verknüpft ist (z. B. über Variablen) und eine graphische Benutzeroberfläche mittels einer Anzeige- und Eingabeeinheit bereitstellt. Die Vorrichtung kann die Anzeige-und Eingabeeinheit umfassen. Die Anzeige- und Eingabeeinheit kann z. B. an der Vorrichtung angeordnet sein. Alternativ kann die die Anzeige- und Eingabeeinheit Teil einer externen Einrichtung sein, z. B. eine zentrale Leitstation, welche ausgebildet ist, die Vorrichtung aus der Ferne zu überwachen, steuern, parametrieren und/oder konfigurieren. Ein Datenaustausch zwischen der Vorrichtung und der externen Einrichtung kann auf einer TCP/IP-Kommunikation und/oder den Normen der Reihe IEC 60870-5 und -6 basieren. Bei dem Steuerungsprogramm und/oder dem Visualisierungsprogramm kann es sich jeweils um eine gekapselte Programmorganisationseinheit handeln, die in einem Haupttask der SPS aufgerufen wird.

Die Vorrichtung ist durch ein Verbinden des mindestens einen Ein- und/oder Ausgangsmoduls mit dem Bus während der Laufzeit der SPS (in einem laufenden Programmzyklus der SPS) erweiterbar. Ferner ist die Vorrichtung durch einen Benutzer mittels der Benutzeroberfläche während der Laufzeit der SPS parametrierbar und/oder konfigurierbar. Die Erweiterbarkeit durch das Verbinden des mindestens einen Ein- und/oder Ausgangsmoduls und die Parametrierbarkeit und/oder Konfigurierbarkeit der Vorrichtung ist während der Laufzeit der SPS und ohne Einsatz eines SPS-Engineering-Werkzeugs möglich.

Das erfindungsgemäße Verfahren bietet somit den besonderen Vorzug, dass eine SPS-basierte Vorrichtung, z. B. eine RTU, zur Laufzeit der SPS beliebig um Ein- und/oder Ausgangsmodule erweitert werden kann und ohne Engineering-Aufwand in Form von SPS-Programmierung zur Laufzeit der SPS frei konfiguriert und/oder parametriert werden kann. Gleichzeitig bietet die erfindungsgemäße Technik hohe Freiheitsgrade für einen Benutzer, da sich im Steuerungsprogramm individuelle Zusatzfunktionen, z. B. komplexe Logiken, realisieren lassen.

Im Verhalten und Handling unterscheidet sich eine mit der erfindungsgemäßen Technik realisierte und entsprechend konfigurierte Vorrichtung, insbesondere eine RTU, nicht oder kaum von einer bekannten Fertig-RTU, d. h. einer auf dem Markt erhältlichen Blackbox-Lösung. Die erfindungsgemäße Vorrichtung lässt sich über das Visualisierungsprogramm konfigurieren bzw. parametrieren und in Betrieb nehmen, ohne dass der Benutzer ein SPS-Engineering-Werkzeug einsetzen muss. Ferner lassen sich Ein- und/oder Ausgangsmodule beliebig hinzufügen und nachparametrieren. Ein freies Konfigurieren und/oder Parametrieren bzw. ein beliebiges Hinzufügen von Ein- und/oder Ausgangsmodulen ist bei bekannten RTUs, die als SPSs realisiert sind, ohne Engineering-Aufwand und insbesondere im Betrieb des SPS nicht möglich.

Dadurch, dass die erfindungsgemäße Vorrichtung auf einer SPS basiert und das Steuerungsprogramm lediglich in mindestens einer IEC-61131-konformen Programmiersprache erstellt ist, ist es ferner auf vorteilhafte Weise möglich, unter Zuhilfenahme eines SPS-Engineering-Werkzeugs beliebige Zusatzfunktionen, z. B. komplexe Logiken, hinzuzufügen. Dies ist für den Benutzer bei den Blackbox-Lösungen der bekannten Fertig-RTUs nicht möglich.

In einer bevorzugten Ausführungsform ist das Visualisierungsprogramm lediglich (d. h. ausschließlich) in mindestens einer IEC-61131-konformen Programmiersprache erstellt. Das Visualisierungsprogramm kann (direkt) in einer IEC-61131-Echtzeit- Laufzeitumgebung ausgeführt werden und/oder ausführbar sein. Dadurch werden auf vorteilhafte Weise keine separaten Laufzeitumgebungen (engl. runtime environments) für das Visualisierungs- und das Steuerungsprogramm benötigt. Stattdessen kann das Visualisierungsprogramm in derselben Echtzeitumgebung laufen wie das eigentliche Steuerungsprogramm, sodass das Visualisierungsprogramm unabhängig vom Typ und Hersteller der SPS bzw. Vorrichtung ist.

In einer weiteren bevorzugten Ausführungsvariante umfasst das Verfahren ferner ein (automatisches) Erkennen eines Busaufbaus während der Laufzeit der SPS, z. B. beim Start der SPS und/oder des Steuerungsprogramms, wobei der Busaufbau das mindestens eine mit dem Bus verbundene Ein- und/oder Ausgangsmodul umfasst. Das Verfahren umfasst ferner ein Feststellen, ob sich der erkannte Busaufbau von einem hinterlegten Busaufbau unterscheidet. Beispielsweise kann der Bus zur Laufzeit der SPS aus dem SPS-Programm heraus, welches beim Start in der SPS-Haupttask aufgerufen worden ist, ausgelesen werden. Beim Erkennen des Busaufbaus kann (zusätzlich) z. B. eine physische Adresse jedes des mindestens einen Ein- und/oder Ausgangsmoduls und/oder eine physische Adresse eines Ein- oder Ausgangs jedes mindestens einen Ein- und/oder Ausgangsmoduls bestimmt werden. Der erkannte Busaufbau kann die physische(n) Adresse(n) umfassen. Auf vorteilhafte Weise können somit Ein- und/oder Ausgangsmodule während der Laufzeit der SPS angeschlossen und erkannt werden, ohne dass ein Unterbrechen der SPS bzw. des Steuerungsprogramms notwendig ist.

In einer weiteren Ausführungsvariante wird der erkannte Busaufbau durch das Visualisierungsprogramm dargestellt und festgestellte Unterschiede zu dem hinterlegten Busaufbau (durch das Visualisierungsprogramm) angezeigt. Vorteilhafterweise kann dem Benutzer so angezeigt werden, ob, und wenn ja, welche Ein- und/oder Ausgangsmodule neu mit dem Bus verbunden wurden und daher nicht bei der Parametrierung und/oder Konfiguration der Vorrichtung berücksichtigt sind.

In einer weiteren Ausführungsform steuert das Steuerungsprogramm die Vorrichtung während der Laufzeit der SPS gemäß einem virtuellen Datenmodell, das die Vorrichtung gemäß einer hinterlegten Parametrierung und/oder Konfiguration der Vorrichtung abbildet. Wenn sich nach dem Start der SPS bzw. des Steuerungsprogramms bereits eine Parametrierung und Konfiguration für die Vorrichtung in Form des virtuellen Datenmodells auf der SPS befindet bzw. abrufbar ist, wird sich die Vorrichtung nach dem Hochfahren der Steuerung gemäß ihrer Parametrierung und Konfiguration verhalten (z. B. aktiv eine Verbindung, beispielsweise zu einem angeschlossenen Aktor, aufbauen, passiv auf Anfragen zum Verbindungsaufbau warten usw.). Wenn sich nach dem Start des Steuerungsprogramms keine Parametrierung und Konfiguration für die Vorrichtung auf der SPS befindet, verharrt die nicht-parametrierte Vorrichtung im inaktiven Zustand, bis der Benutzer die Vorrichtung über das Visualisierungsprogramm parametriert und die Parametrierung speichert oder eine vorgefertigte Parametrierung auf die SPS bringt. Anschließend verhält sich die Vorrichtung gemäß dieser Parametrierung.

In einer weiteren Ausführungsform sind im virtuellen Datenmodell ein oder mehrere Datenpunkte angelegt oder anlegbar, die jeweils zumindest einen Parameter mit einem Ein- oder Ausgangswert, der durch die Vorrichtung über das mindestens eine Ein- und/oder Ausgangsmodul überwacht und/oder gesteuert wird, umfassen. Jeder der Datenpunkte kann jeweils einem des mindestens einen Ein- und/oder Ausgangsmoduls zugeordnet oder zuordenbar sein. Vorzugsweise kann jeder der Datenpunkte jeweils eine Angabe einer physischen Adresse des jeweils einen des mindestens einen Ein- und/oder Ausgangsmoduls und/oder einer physischen Adresse eines Ein- oder Ausgangs des jeweils einen des mindestens einen Ein- und/oder Ausgangsmoduls umfassen. Ferner kann das virtuelle Datenmodell auch eine (Fernwirk-)Kommunikationsschnittstelle umfassen, welche eine Kommunikation zwischen dem virtuellen Datenmodell und der SPS und vorzugsweise dem mindestens einen Ein- und/oder Ausgangsmodul ermöglicht. Beispielsweise können über die Kommunikationsschnittstelle Parameter und/oder Ein- oder Ausgangswerte der Parameter auslesbar sein. Die Kommunikationsschnittstelle kann über das Visualisierungsprogramm (d. h. der graphischen Benutzeroberfläche) parametrierbar sein.

Bei dem virtuellen Datenmodell handelt es sich somit um ein Konstrukt aus Datenstrukturen, welches speziell für die SPS-Anwendung entwickelt wurde. Im Detail existiert hier eine Datenstruktur zur Abbildung eines generischen Datenpunktes und zur Verknüpfung dieses Datenpunktes mit einer (Speicher-)Adresse. In einer von dieser Struktur abgeleiteten Variablen kann jeder verfügbare Datenpunkt gespeichert werden. Das virtuelle Datenmodell enthält nun ein Array von leeren generischen Datenpunkten. Legt der Nutzer über die Visualisierung einen neuen Datenpunkt an wird die Datenpunktkonfiguration des Nutzers in der nächsten leeren Datenstruktur in diesem Array gespeichert. Verknüpft der Nutzer einen Datenpunkt mit einem physikalischen Ein- und/oder Ausgangsmodul bzw. einem Ein- oder Ausgang des Ein- und/oder Ausgangsmoduls, wird die entsprechende Adresse des Ein- oder Ausgang in der Struktur des Datenpunkts gespeichert.

Der Benutzer kann somit die Vorrichtung auf einfache Weise durch Verändern des virtuellen Datenmodells parametrieren und/oder konfigurieren, insbesondere ohne dass ein SPS-Engineering-Werkzeug notwendig ist oder die SPS bzw. Steuerungsprogramm angehalten werden muss.

In einer weiteren Ausführungsvariante wird das virtuelle Datenmodell in der graphischen Benutzeroberfläche angezeigt und ist durch den Benutzer veränderbar. Dadurch wird dem Benutzer eine besonders einfache Möglichkeit bereitgestellt, die Vorrichtung zu parametrieren und/oder zu konfigurieren.

In einer weiteren Ausführungsform ist für jedes Ein- und/oder Ausgangsmodul, das im erkannten Busaufbau und nicht im hinterlegten Busaufbau umfasst ist, während der Laufzeit der SPS mindestens ein neuer Datenpunkt durch den Benutzer erzeugbar, konfigurierbar und/oder parametrierbar.

Dem Benutzer wird somit nicht nur angezeigt, ob, und wenn ja, welche Ein- und/oder Ausgangsmodule neu mit dem Bus verbunden wurden und (noch) nicht bei der Parametrierung und/oder Konfiguration der Vorrichtung berücksichtigt sind. Zusätzlich wird dem Benutzer eine einfache Möglichkeit bereitgestellt, diese neu mit dem Bus verbundenen Ein- und/oder Ausgangsmodule während der Laufzeit der SPS in die Parametrierung und/oder Konfiguration der Vorrichtung einzubeziehen, sodass auch diese Ein- und/oder Ausgangsmodule bzw. die an diesen angeschlossenen Feldgeräten überwacht, gesteuert und/oder geregelt werden. Sollte sich z. B. der hinterlegte Busaufbau von dem neu erkannten Busaufbau unterscheiden, wird dies dem Benutzer in der graphischen Benutzeroberfläche angezeigt, sodass ggf. neu hinzugekommene Ein- und/oder Ausgangsmodule mit neuen angelegten Datenpunkten verknüpft werden können.

In einer weiteren Ausführungsform werden das Steuerungsprogramm, das Visualisierungsprogramm und/oder das virtuelle Datenmodell auf einem nichtflüchtigen Speicher, insbesondere einer Speicherkarte, die über einen Einschub der Vorrichtung mit dem SPS signaltechnisch verbindbar ist, gespeichert. Das Steuerungsprogramm, das Visualisierungsprogramm und/oder das virtuelles Datenmodell können bei einem Start der SPS geladen und gestartet werden, sodass sich die Vorrichtung gemäß dem virtuellen Datenmodell gesteuert wird. Ferner können Variablenzuordnungen und/oder Taskzuordnungen im virtuellen Datenmodell oder separat auf einem nichtflüchtigen Speicher gespeichert sein. Die Variablenzuordnungen und/oder Taskzuordnungen können geladen werden und z. B. ein Programm, das einer Task zugeordnet ist, gestartet werden. Durch die nichtflüchtige Speicherung ist sichergestellt, dass die gespeicherten Daten und/oder Programme auch nach einem Kaltstart der SPS vorhanden sind, insbesondere die im virtuellen Datenmodell gespeicherte Parametrierung und/oder Konfiguration der Vorrichtung. Die Speicherung auf einem nichtflüchtigen Speicher, insbesondere einer mobilen Speicherkarte, ermöglicht ferner, ein fertiggestelltes virtuelles Datenmodell, d. h. eine fertiggestellte Parametrierung und/oder Konfiguration, zu vervielfältigen und so beliebig viele Vorrichtungen mit derselben Parametrierung und/oder Konfiguration zu belegen. Ferner ermöglicht diese Anordnung auch, dass sich eine fertiggestellte Parametrierung und/oder Konfiguration, beispielsweise mittels FTP (File Transfer Protocol), in das Steuerungsprogramm laden lässt, sodass verteilte SPSen von der Ferne, z. B. von einer zentralen Leitstation aus, mit der fertiggestellten Parametrierung und/oder Konfiguration beladen werden können.

In einer weiteren besonderen Ausführungsvariante umfasst das Steuerungsprogramm mindestens ein Protokollstack für mindestens ein durch das SPS unterstütztes Fernwirkprotokoll, das in mindestens einer IEC-61131-konformen Programmiersprache erstellt ist. Vorzugsweise umfasst das Steuerungsprogramm das Protokollstack (vollständig). Das Verfahren kann ferner ein Aktualisieren des mindestens einen Protokollstacks durch Ändern des Steuerungsprogramms, vorzugsweise zur Laufzeit des SPS, umfassen. Das Aktualisieren kann ein Updaten des mindestens einen Protokollstacks und/oder ein Nachladen mindestens eines weiteren Protokollstacks umfassen. Da das mindestens eine Protokollstack, wie auch das Steuerungsprogramm, in mindestens einer IEC-61131-konformen Programmiersprache erstellt ist, ist für das Aktualisieren kein Firmwareupdate des Steuerungsprogramms notwendig. Es ist lediglich das Steuerungsprogramm zu ändern, was z. B. unter Zuhilfenahme eines SPS-Engineering-Werkzeuges und ohne Unterbrechung des Betriebs des SPS möglich ist.

Gemäß einem weiteren allgemeinen Gesichtspunkt wird ein Mittel zur Datenverarbeitung, insbesondere eine speicherprogrammierbare Steuerung, SPS, das zur Ausführung des Verfahrens wie hierin offenbart ausgebildet ist, bereitgestellt.

Gemäß einem weiteren allgemeinen Gesichtspunkt wird eine automatisierungstechnische Vorrichtung, insbesondere eine Fernwirk-Außenstation, RTU, umfassend ein Mittel zur Datenverarbeitung wie hierin offenbart, bereitgestellt. Die Vorrichtung kann mindestens ein Ein- und/oder Ausgangsmodul, die mit einem Bus, insbesondere einem Rückwandbus, der Vorrichtung signaltechnisch verbindbar oder verbunden ist, ein Steuerungsprogramm und/oder ein Visualisierungsprogramm wie hierin offenbart umfassen. Die Vorrichtung kann ferner ein Protokollstack wie hierin offenbart umfassen.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung einer Vorrichtung gemäß einer Ausführungsform der Erfindung; und
- Figur 2:: eine schematische Darstellung eines Steuerungsprogramms gemäß der Ausführungsform.

Gleiche oder funktional äquivalente Elemente sind in allen Figuren mit denselben Bezugszeichen beschrieben und zum Teil nicht gesondert beschrieben.

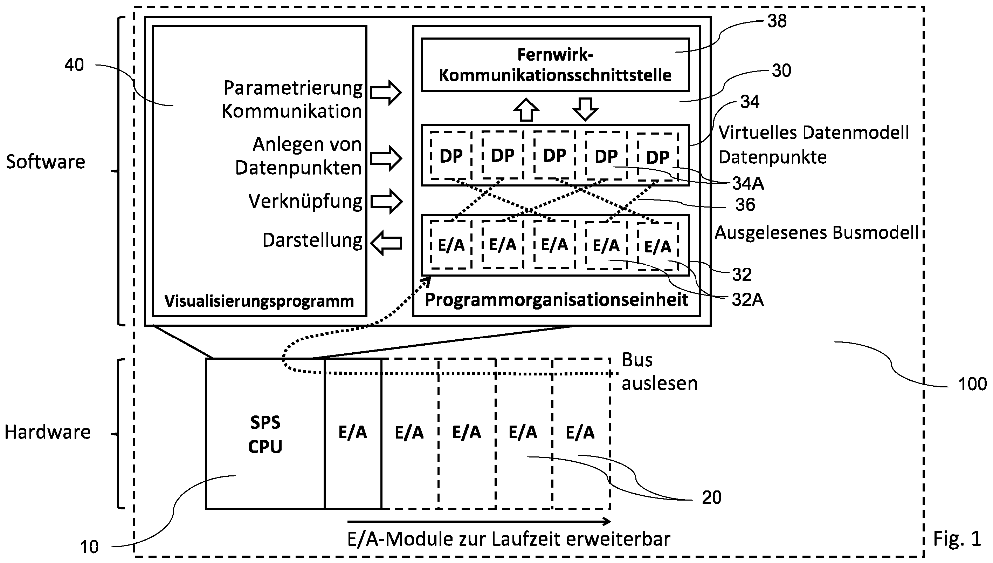

Figur 1 zeigt eine schematische Darstellung einer automatisierungstechnischen Vorrichtung 100, insbesondere einer Fernwirk-Außenstation, RTU, umfassend ein Mittel zur Datenverarbeitung, insbesondere eine speicherprogrammierbare Steuerung 10, SPS, das zur Ausführung eines erfindungsgemäßen Verfahrens zur Parametrierung und/oder Konfiguration der Vorrichtung 100 ausgebildet ist.

Die Vorrichtung 100 umfasst Hardware- und Softwarekomponenten. Hardwareseitig umfasst die Vorrichtung die bereits erwähnte SPS 10, welche eine Steuereinheit, CPU, aufweist. Ferner ist die Vorrichtung 100 durch ein signaltechnisches Verbinden mindestens eines Ein- und/oder Ausgangsmoduls 20 mit einem (nicht dargestellten) Bus, insbesondere einem Rückwandbus, der Vorrichtung 100 erweiterbar.

Softwareseitig umfasst die Vorrichtung 100 ein Steuerungsprogramm 30 zur Steuerung der Vorrichtung 100 und ein Visualisierungsprogramm 40. Das Steuerungsprogramm 30 ist lediglich in mindestens einer IEC-61131-konformen Programmiersprache erstellt. Das Visualisierungsprogramm 40 ist signaltechnisch mit dem Steuerungsprogramm 30 verknüpft und stellt eine graphische Benutzeroberfläche mittels einer Anzeige- und Eingabeeinheit bereit. Vorzugsweise ist das Visualisierungsprogramm 40 lediglich in mindestens einer IEC-61131-konformen Programmiersprache erstellt.

Gemäß dem erfindungsgemäßen Verfahren wird das Steuerungsprogramm 30 und das Visualisierungsprogramm 40 ausgeführt. Das Verfahren zeichnet sich insbesondere dadurch aus, dass die Vorrichtung 100 durch ein Verbinden des mindestens einen Ein- und/oder Ausgangsmoduls 20 mit dem Bus während der Laufzeit der SPS 10 erweiterbar und durch einen Benutzer mittels der Benutzeroberfläche während der Laufzeit der SPS 10 parametrierbar und/oder konfigurierbar ist.

Die erfindungsgemäße Technik bietet somit den besonderen Vorzug, dass eine SPS-basierte Vorrichtung, z. B. eine RTU, zur Laufzeit der SPS beliebig um Ein- und/oder Ausgangsmodule erweitert werden kann und ohne Engineering-Aufwand in Form von SPS-Programmierung zur Laufzeit der SPS frei konfiguriert und/oder parametriert werden kann. Gleichzeitig ist es dadurch, dass die erfindungsgemäße Vorrichtung auf einer SPS basiert und das Steuerungsprogramm lediglich in mindestens einer IEC-61131-konformen Programmiersprache erstellt ist, ferner möglich, dass unter Zuhilfenahme eines SPS-Engineering-Werkzeugs beliebige Zusatzlogiken hinzuzufügen werden. Keine bekannte, auf dem Markt erhältliche RTU vereint all diese Vorteile der erfindungsgemäßen Technik.

Das Steuerungsprogramm 30 umfasst ferner einen erkannten Bausaufbau 32, der während der Laufzeit der SPS 10 erkannt wird, wobei der Busaufbau 32 das mindestens eine mit dem Bus verbundene Ein- und/oder Ausgangsmodul 20 umfasst. Anhand eines Feststellens, ob sich der erkannte Busaufbau 32 von einem hinterlegten Busaufbau unterscheidet, kann bestimmt werden, ob ein neues Ein- und/oder Ausgangsmodul 20 verbunden worden ist, für welches die Vorrichtung 100 nicht parametriert und/oder konfiguriert ist. Der erkannte Busaufbau 32 kann durch das Visualisierungsprogramm 40 dargestellt werden und festgestellte Unterschiede zu dem hinterlegten Busaufbau anzeigen.

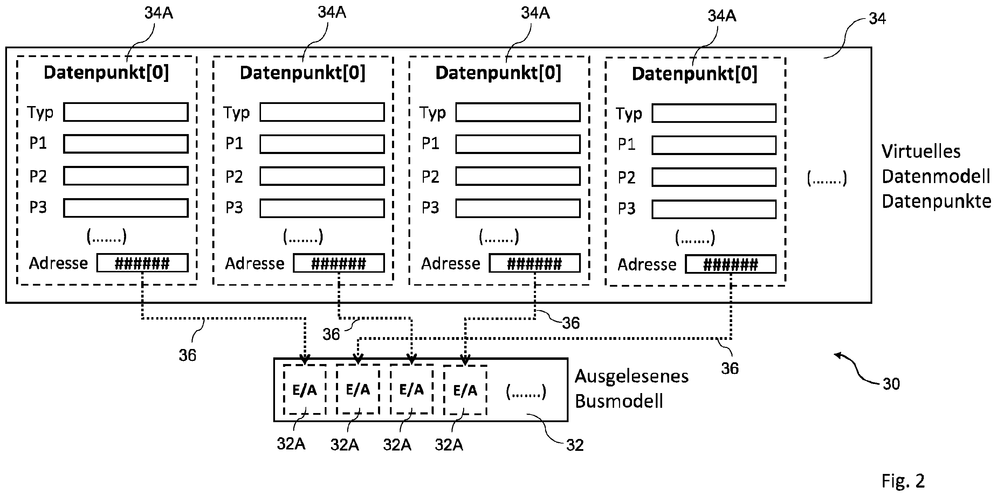

Das Steuerungsprogramm 30, das vergrößert und mit weiteren Details in Figur 2 schematisch dargestellt ist, umfasst ferner ein virtuelles Datenmodell 34, das die Vorrichtung 100 gemäß einer hinterlegten Parametrierung und/oder Konfiguration der Vorrichtung 100 abbildet. Das Steuerungsprogramm 30 ist ausgebildet, die Vorrichtung 100 während der Laufzeit der SPS 10 gemäß dem virtuellen Datenmodell 34 zu steuern. Das virtuelle Datenmodell 34 wird in der graphischen Benutzeroberfläche angezeigt wird und ist durch den Benutzer veränderbar.

Im virtuellen Datenmodell 34 sind ein oder mehrere Datenpunkte 34A angelegt oder anlegbar. die jeweils zumindest einen Parameter, der durch die Vorrichtung 100 über das mindestens eine Ein-und/oder Ausgangsmodul 20 überwacht und/oder gesteuert wird, umfassen. Jedem Parameter ist ein Ein- oder Ausgangswert zugeordnet. Ferner ist jedem der Datenpunkte 34A jeweils ein des mindestens einen Ein- und/oder Ausgangsmoduls 20 zugeordnet oder zuordenbar. Mit anderen Worten, jeder Datenpunkt 34A kann mit einem Ein- und/oder Ausgansmodul 20 über eine Verknüpfung 36 verknüpft sein. Vorzugsweise erfolgt die Verknüpfung 36 durch eine Angabe einer physischen Adresse eines Ein- und/oder Ausgangsmoduls 20 in jedem Datenpunkt 34A.

Ferner kann das virtuelle Datenmodell auch eine (Fernwirk-)Kommunikationsschnittstelle 38 umfassen, welche eine Kommunikation zwischen dem virtuellen Datenmodell 34 und der SPS 10 und vorzugsweise dem mindestens einen Ein- und/oder Ausgangsmodul 10 ermöglicht. Beispielsweise können über die Kommunikationsschnittstelle Parameter und/oder Ein- oder Ausgangswerte der Parameter auslesbar sein. Eine Zuordnung der ausgelesenen Parameter eines Ein- und/oder Ausgangsmoduls 10 ist z. B. durch die Verknüpfung 36 und die im jeweiligen Datenpunkt 34A angegebenen physischen Adresse des Ein- und/oder Ausgangsmoduls 10 möglich.

Für jedes Ein- und/oder Ausgangsmodul 20, das im erkannten Busaufbau 32 und nicht im hinterlegten Busaufbau umfasst ist, kann während der Laufzeit der SPS 10 mindestens ein neuer Datenpunkt durch den Benutzer erzeugbar, konfigurierbar und/oder parametrierbar sein. Über die graphische Benutzeroberfläche kann der Benutzer somit auf einfache Weise erkennen, welche Ein- und/oder Ausgangsmodule neu mit dem Bus verbunden wurden, und diese neu mit dem Bus verbundenen Ein- und/oder Ausgangsmodule auf einfache Weise durch Verändern des virtuellen Datenmodells in die Parametrierung und/oder Konfiguration der Vorrichtung einzubeziehen, sodass auch diese Ein- und/oder Ausgangsmodule bzw. die an diesen angeschlossenen Feldgeräten überwacht, gesteuert und/oder geregelt werden.

Das Steuerungsprogramm 30, das Visualisierungsprogramm 40 und/oder das virtuelle Datenmodell 34 können ferner auf einem (nicht dargestellten) nichtflüchtigen Speicher, insbesondere einer Speicherkarte, die über einen Einschub der Vorrichtung 100 mit dem SPS 10 signaltechnisch verbindbar ist, gespeichert werden. Das Steuerungsprogramm 30, das Visualisierungsprogramm 40 und das virtuelles Datenmodell 34 werden bei einem Start der SPS 10 geladen und gestartet, sodass sich die Vorrichtung 100 gemäß dem virtuellen Datenmodell 34 gesteuert wird.

Ferner kann das Steuerungsprogramm 30 mindestens ein (nicht dargestelltes) Protokollstack für mindestens ein durch das SPS 10 unterstützte Fernwirkprotokoll umfassen, das in mindestens einer IEC-61131-konformen Programmiersprache erstellt ist. Das mindestens eine Protokollstack kann durch Ändern des Steuerungsprogramms 30, vorzugsweise zur Laufzeit des SPS 10, aktualisiert werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 10: SPS
- 20: Ein- und/oder Ausgangsmodul
- 30: Steuerungsprogramm
- 32: Bussaufbau
- 34: Datenmodell
- 34A: Datenpunkt
- 36: Verknüpfung
- 38: Kommunikationsschnittstelle
- 40: Visualisierungsprogramm
- 100: Vorrichtung

## Patentansprüche

1. Verfahren zur Parametrierung und/oder Konfiguration einer auf einer speicherprogrammierbaren Steuerung (10), SPS, basierenden, automatisierungstechnischen Vorrichtung (100), vorzugsweise einer auf einer SPS (10) basierenden Fernwirk-Außenstation, wobei mindestens ein Ein- und/oder Ausgangsmodul (20) mit einem Bus, insbesondere einem Rückwandbus, der Vorrichtung (100) signaltechnisch verbindbar ist, das Verfahren umfassend:
a) Ausführen eines Steuerungsprogramms (30), das lediglich in mindestens einer IEC-61131-konformen Programmiersprache erstellt ist, zur Steuerung der Vorrichtung (100); und
b) Ausführen eines Visualisierungsprogramms (40), das mit dem Steuerungsprogramm (30) signaltechnisch verknüpft ist und eine graphische Benutzeroberfläche mittels einer Anzeige-und Eingabeeinheit bereitstellt, wobei die Vorrichtung (100) durch ein Verbinden des mindestens einen Ein- und/oder Ausgangsmoduls (20) mit dem Bus während der Laufzeit der SPS (10) erweiterbar und durch einen Benutzer mittels der Benutzeroberfläche während der Laufzeit der SPS (10) parametrierbar und/oder konfigurierbar ist.

2. Verfahren nach Anspruch 1, wobei das Visualisierungsprogramm (40) lediglich in mindestens einer IEC-61131-konformen Programmiersprache erstellt ist.

3. Verfahren nach Anspruch 1 oder 2, das Verfahren ferner umfassend:
a) Erkennen eines Busaufbaus (32) während der Laufzeit der SPS (10), wobei der Busaufbau (32) das mindestens eine mit dem Bus verbundene Ein- und/oder Ausgangsmodul (20) umfasst; und
b) Feststellen, ob sich der erkannte Busaufbau (32) von einem hinterlegten Busaufbau unterscheidet.

4. Verfahren nach Anspruch 3, wobei der erkannte Busaufbau (32) durch das Visualisierungsprogramm (40) dargestellt wird und festgestellte Unterschiede zu dem hinterlegten Busaufbau angezeigt werden.

5. Verfahren nach einem der vorhergehenden Ansprüche, wobei das Steuerungsprogramm (30) die Vorrichtung (100) während der Laufzeit der SPS (10) gemäß einem virtuellen Datenmodell (34), das die Vorrichtung (100) gemäß einer hinterlegten Parametrierung und/oder Konfiguration der Vorrichtung (100) abbildet, steuert.

6. Verfahren nach Anspruch 5, wobei im virtuellen Datenmodell (34) ein oder mehrere Datenpunkte (34A) angelegt oder anlegbar sind, die jeweils zumindest einen Parameter mit einem Ein- oder Ausgangswert, der durch die Vorrichtung (100) über das mindestens eine Ein- und/oder Ausgangsmodul (20) überwacht und/oder gesteuert wird, umfassen.

7. Verfahren nach Anspruch 6, wobei jeder der Datenpunkte (34A) jeweils einem des mindestens einen Ein- und/oder Ausgangsmoduls (20) zugeordnet oder zuordenbar ist, und vorzugsweise jeweils eine Angabe einer physischen Adresse des jeweils einen des mindestens einen Ein-und/oder Ausgangsmoduls (20) umfasst.

8. Verfahren nach einem der Ansprüche 5 bis 7, wobei das virtuelle Datenmodell (34) in der graphischen Benutzeroberfläche angezeigt wird und durch den Benutzer veränderbar ist.

9. Verfahren nach Anspruch 8, wenn abhängig von Anspruch 4, wobei für jedes Ein- und/oder Ausgangsmodul (20), das im erkannten Busaufbau (32) und nicht im hinterlegten Busaufbau umfasst ist, während der Laufzeit der SPS (10) mindestens ein neuer Datenpunkt durch den Benutzer erzeugbar, konfigurierbar und parametrierbar ist.

10. Verfahren nach einem der Ansprüche 5 bis 9, wobei das Steuerungsprogramm (30), das Visualisierungsprogramm (40) und das virtuelle Datenmodell (34) auf einem nichtflüchtigen Speicher, insbesondere einer Speicherkarte, die über einen Einschub der Vorrichtung (100) mit dem SPS (10) signaltechnisch verbindbar ist, gespeichert werden.

11. Verfahren nach Anspruch 10, wobei das Steuerungsprogramm (30), das Visualisierungsprogramm (40) und das virtuelles Datenmodell (34) bei einem Start der SPS (10) geladen und gestartet werden, sodass sich die Vorrichtung (100) gemäß dem virtuellen Datenmodell (34) gesteuert wird.

12. Verfahren nach einem der vorherigen Ansprüche, wobei das Steuerungsprogramm (30) mindestens ein Protokollstack für mindestens ein durch das SPS (10) unterstütztes Fernwirkprotokoll umfasst, das in mindestens einer IEC-61131-konformen Programmiersprache erstellt ist.

13. Verfahren nach 12, ferner umfassend:
Aktualisieren des mindestens einen Protokollstacks durch Ändern des Steuerungsprogramms (30), vorzugsweise zur Laufzeit des SPS (10).

14. Mittel zur Datenverarbeitung, insbesondere eine speicherprogrammierbare Steuerung (10), SPS, das zur Ausführung des Verfahrens nach einem der vorherigen Ansprüche ausgebildet ist.

15. Automatisierungstechnische Vorrichtung (100), insbesondere Fernwirk-Außenstation, umfassend ein Mittel zur Datenverarbeitung nach Anspruch 14.

## Claims

1. Method for parameterisation and/or configuration of an automation device (100), the automation device (100) being based on a programmable logic controller (10), PLC, the device (100) being preferably a remote terminal unit based on a PLC (10), wherein at least one input and/or output module (20) is signal-connectable to a bus, preferably a backplane bus, of the device (100), the method comprising:
a) executing a control program (30), created only in at least one IEC-61131-compliant programming language, for controlling the device (100); and
b) executing a visualisation program (40) which is signal-connected to the control program (30) and provides a graphical user interface by means of a display and input unit, wherein the device (100) is expandable during the runtime of the PLC (10) by connecting the at least one input and/or output module (20) to the bus and is parameterisable and/or configurable by a user via the user interface during the runtime of the PLC (10).

2. The method according to claim 1, wherein the visualisation program (40) is created only in at least one IEC-61131-compliant programming language.

3. The method according to claim 1 or 2, the method further comprising:
a) detecting a bus structure (32) during the runtime of the PLC (10), wherein the bus structure (32) comprises the at least one input and/or output module (20) connected to the bus; and
b) determining whether the detected bus configuration (32) differs from a stored bus configuration.

4. The method according to claim 3, wherein the determined bus structure (32) is displayed by the visualisation program (40) and determined differences to the stored bus structure are displayed.

5. The method according to any one of the preceding claims, wherein the control program (30) controls the device (100) during the runtime of the PLC (10) according to a virtual data model (34) which maps the device (100) according to a stored parameterisation and/or configuration of the device (100).

6. The method according to claim 5, wherein one or more data points (34A) are created or can be created in the virtual data model (34), each comprising at least one parameter with an input or output value which is monitored and/or controlled by the device (100) via the at least one input and/or output module (20).

7. The method according to claim 6, wherein each of the data points (34A) is assigned or assignable to a respective one of the at least one input and/or output module (20), and preferably each comprises an indication of a physical address of the respective one of the at least one input and/or output module (20).

8. The method according to any one of claims 5 to 7, wherein the virtual data model (34) is displayed in the graphical user interface and is modifiable by the user.

9. The method according to claim 8, if dependent on claim 4, wherein for each input and/or output module (20) which is included in the determined bus structure (32) and not in the stored bus structure, at least one new data point can be generated, configured and parameterised by the user during the runtime of the PLC (10).

10. The method according to any one of the claims 5 to 9, wherein the control program (30), the visualisation program (40) and the virtual data model (34) are stored on a non-volatile memory, in particular a memory card, which is connectable to the PLC (10) via a plug-in unit of the device (100) by means of signals.

11. Method according to claim 10, wherein the control program (30), the visualisation program (40) and the virtual data model (34) are loaded and started when the PLC (10) is started, so that the device (100) is controlled according to the virtual data model (34).

12. Method according to any one of the preceding claims, wherein the control program (30) comprises at least one protocol stack for at least one remote control protocol supported by the PLC (10), which is created in at least one IEC-61131 compliant programming language.

13. The method according to 12, further comprising:
updating the at least one protocol stack by changing the control program (30), preferably at runtime of the PLC (10).

14. Means for data processing, preferably a programmable logic controller (10), PLC, which is configured to carry out the method according to any one of the preceding claims.

15. Automation device (100), preferably a remote terminal unit, comprising the means for data processing according to claim 14.

## Revendications

1. Procédé de paramétrage et/ou de configuration d'un dispositif d'automatisation (100) basé sur un automate programmable industriel (10), API, de préférence d'une station extérieure de téléconduite basée sur un API (10), dans lequel au moins un module d'entrée et/ou de sortie (20) peut être relié par voie de signaux à un bus, en particulier un bus de fond de panier, du dispositif (100), le procédé comprenant :
a) l'exécution d'un programme de commande (30), qui est rédigé uniquement dans au moins un langage de programmation conforme à la norme CEI 61131, pour la commande du dispositif (100) ; et
b) l'exécution d'un programme de visualisation (40), qui est relié par voie de signaux au programme de commande (30) et met à disposition une interface utilisateur graphique au moyen d'une unité d'affichage et de saisie, dans lequel le dispositif (100), par un raccordement de l'au moins un module d'entrée et/ou de sortie (20) au bus, est extensible pendant l'exécution de l'API (10) et est paramétrable et/ou configurable par un utilisateur au moyen de l'interface utilisateur pendant l'exécution de l'API (10).

2. Procédé selon la revendication 1, dans lequel le programme de visualisation (40) est rédigé uniquement dans au moins un langage de programmation conforme à la norme CEI 61131.

3. Procédé selon la revendication 1 ou 2, le procédé comprenant en outre :
a) la détection d'une structure de bus (32) pendant l'exécution de l'API (10), dans lequel la structure de bus (32) comprend l'au moins un module d'entrée et/ou de sortie (20) relié au bus ; et
b) la constatation si la structure de bus (32) détectée diffère d'une structure de bus enregistrée.

4. Procédé selon la revendication 3, dans lequel la structure de bus (32) détectée est représentée par le programme de visualisation (40) et des différences constatées par rapport à la structure de bus enregistrée sont affichées.

5. Procédé selon l'une des revendications précédentes, dans lequel le programme de commande (30) commande le dispositif (100) pendant l'exécution de l'API (10) selon un modèle de données virtuel (34), qui représente le dispositif (100) selon un paramétrage et/ou une configuration enregistré(e) du dispositif (100).

6. Procédé selon la revendication 5, dans lequel un ou plusieurs points de données (34A) sont créés ou peuvent être créés dans le modèle de données virtuel (34), comprenant respectivement au moins un paramètre avec une valeur d'entrée ou de sortie, qui est surveillée et/ou commandée par le dispositif (100) via l'au moins un module d'entrée et/ou de sortie (20).

7. Procédé selon la revendication 6, dans lequel chacun des points de données (34A) est associé ou peut être associé respectivement à l'un de l'au moins un module d'entrée et/ou de sortie (20), et comprend de préférence respectivement une indication d'une adresse physique de l'un respectif de l'au moins un module d'entrée et/ou de sortie (20).

8. Procédé selon l'une des revendications 5 à 7, dans lequel le modèle de données virtuel (34) est affiché dans l'interface utilisateur graphique et est modifiable par l'utilisateur.

9. Procédé selon la revendication 8, lorsqu'elle dépend de la revendication 4, dans lequel pour chaque module d'entrée et/ou de sortie (20) qui est compris dans la structure de bus (32) détectée et non dans la structure de bus enregistrée, au moins un nouveau point de données peut être créé, configuré et paramétré par l'utilisateur pendant l'exécution de l'API (10).

10. Procédé selon l'une des revendications 5 à 9, dans lequel le programme de commande (30), le programme de visualisation (40) et le modèle de données virtuel (34) sont stockés sur une mémoire non volatile, en particulier une carte mémoire, qui peut être reliée par voie de signaux à l'API (10) via un logement du dispositif (100).

11. Procédé selon la revendication 10, dans lequel le programme de commande (30), le programme de visualisation (40) et le modèle de données virtuel (34) sont chargés et démarrés lors d'un démarrage de l'API (10), de sorte que le dispositif (100) est commandé selon le modèle de données virtuel (34).

12. Procédé selon l'une des revendications précédentes, dans lequel le programme de commande (30) comprend au moins une pile de protocoles pour au moins un protocole de téléconduite pris en charge par l'API (10), qui est rédigée dans au moins un langage de programmation conforme à la norme CEI 61131.

13. Procédé selon la revendication 12, comprenant en outre :
la mise à jour de l'au moins une pile de protocoles par modification du programme de commande (30), de préférence pendant l'exécution de l'API (10).

14. Moyen de traitement de données, en particulier un automate programmable industriel (10), API, qui est conçu pour l'exécution du procédé selon l'une des revendications précédentes.

15. Dispositif d'automatisation (100), en particulier station extérieure de téléconduite, comprenant un moyen de traitement de données selon la revendication 14.
